# EUROPEAN PATENT APPLICATION

(11) **EP 4 310 148 A1**
(43) Date of publication of application: **24.01.2024**
(21) Application number: 22306070.8
(22) Date of filing: 19.07.2022
(51) Int. Cl.: C08L 83/04, C08G 61/06

(54) **COMPOSITE MATERIAL COMPRISING A ROMP-DERIVED POLYOLEFIN EMBEDDED IN A SILICONE MATRIX**

(71) Applicant: Demeta, 35000 Rennes (FR); Université de Rennes, 35042 Rennes (FR); Centre national de la recherche scientifique, 75016 Paris (FR)
(72) Inventor: BEUGUEL, Quentin, 35190 SAINT THUAL (FR); CARPENTIER, Jean-François, 35690 ACIGNE (FR); GUILLAUME, Sophie, 35500 VITRE (FR); QUEVAL, Pierre, 35137 PLEUMELEUC (FR)
(74) Representative: Renard, Emmanuelle

(57) **Abstract**

The present invention relates to a composite material comprising inclusions of a polyolefin obtainable by ring-opening metathesis polymerization of at least one cycloolefin, within a silicone matrix. It is also directed to a method for the preparation of this composite material and to the use of this composite material in the manufacture of various items.

## Description

### Field of the invention

The present invention relates to a composite material comprising inclusions of a polyolefin obtainable by ring-opening metathesis polymerization of at least one cycloolefin, within a silicone matrix. It is also directed to a method for the preparation of this composite material and to the use of this composite material in the manufacture of various items.

### Background of the invention

Organosiloxane compositions which cure to elastomeric solids are well-known and are especially known to maintain their resiliency over a broad range of temperatures, contrary to organic elastomers such as ethylene propylene diene monomer rubber (EPDM). Typically, these compositions are obtained by mixing a polydiorganosiloxane-based polymer having reactive terminal groups, with a suitable silane (or siloxane)-based cross-linking agent in the presence of one or more fillers and possibly a cross-linking catalyst.

The introduction of inorganic fillers is often required to obtain useful tear resistance, hardness, elongation at break and Young's modulus. These properties are particularly important for sealants used, for example, in expansion joints in the construction and transportation industries, where the need for sealants with low modulus and high elongation is essential. Inorganic fillers such as silica have typically been used for this purpose. However, like all powdered materials, they are not easy to handle and sometimes dangerous for operators' health.

In addition, it has become common practice, in the formulation of silicone-based compositions to include additives such as processing aids and plasticizers. Processing aids may help reduce the initial viscosity of the silicone resin, whereas a plasticizer may increase the flexibility and toughness of the final polymer composition. Plasticizers tend to be generally less volatile than processing aids and are typically introduced into the polymer composition in the form of liquids or low melting point solids which become immiscible liquids during processing. Historically, unreactive siloxanes such as trialkylsilyl-terminated polydiorganosiloxanes (for example trimethylsilyl-terminated polydimethyl siloxane (PDMS)) were originally used as processing aids and/or plasticizers in silicone-based sealants because they were chemically similar and had excellent compatibility but their incorporation in silicone drastically reduces the material stiffness.

Furthermore, whilst the use of polymers with very high degrees of polymerization in siloxane formulations can result in several valuable properties such as high elasticity, the viscosity of such polymers is generally high; they thus become incompatible with low pressure injection processes and either difficult to manage with respect to inter-mixing with other ingredients, such as fillers, cross-linkers, processing aids and/or plasticizers, or require very high shear mixers which are expensive to operate.

There has therefore been a long-felt need within the industry to find means to improve the mechanical properties and the ease of processing of silicones in economically favorable conditions, without impairing other main properties of the silicone product.

### SUMMARY OF THE INVENTION

The inventors have now found that mixing a cycloolefin with a silicone resin, in the presence of a metathesis catalyst, allows reducing the viscosity of the silicone resin to such an extent that it becomes easily injectable or castable by means of industrial tools, and forming, after the metathesis reaction has taken place, *in situ* solid inclusions of a poly olefin which improve the thermal and mechanical properties of the crosslinked silicone matrix. The cycloolefin thus acts as a reactive s diluent.

The use of cycloolefin monomers can avoid uncomfortable and sometimes dangerous powder handling by substituting fillers like silica particles with *in-situ* ROMP-formed polyolefin inclusions.

Moreover, it has been found that inclusions of a ROMP-derived polyolefin, such as polydicyclopentadiene (PDCPD), within a silicone elastomer matrix enable to improve the hardness, the strain-at-break, the thermal conductivity, the thermal resistance, the impact resistance, hot-wet and air-ageing resistance and/or the tear resistance of the silicone. In addition, in such blends, the polymerization of the cycloolefin does not require high curing temperature and does not lead to high exothermicity for processing, which enables this process to be applied to the coating of heat-sensitive items such as electronic parts.

The invention thus relates to a composite material comprising inclusions of a polyolefin obtainable by ring opening metathesis polymerization of at least one cycloolefin, within a silicone matrix.

It also pertains to a method for the preparation of this composite material, comprising the step of polymerizing by ring-opening metathesis at least one cycloolefin with at least one metathesis catalyst which is able to convert said cycloolefin into a polyolefin, in the presence of at least one silicone resin cross-linkable by condensation or by dehydrocoupling reaction and of a cross-linking agent which is able to react with said silicone resin to produce a silicone network.

This invention further relates to the use of the composite material as defined above in the manufacture of parts for terrestrial, nautical or aerospace vehicles (including cars, tractors, trucks, trains, buses, airplanes and space shuttles), such as bumpers, anti-vibration or dampening parts, protection for blades of wind turbines, sports articles (shoes), offshore installations (notably buoys and pipelines), coatings (including thermal insulation coatings, anti-corrosion paints, insulation covers or field joint coatings); chemical equipment including containers, gaskets and pipes, sealants, adhesives, molds, water treatment equipment, camping equipment, military items such as bulletproof vests, electromagnetic shields, or for repairing cracks in masonry structures, notably in concrete, stone or brick, preferably in the manufacture of offshore installations, sealants and coatings, more preferably in the manufacture of insulation coating for oil and gas production equipment.

### DETAILED DESCRIPTION

### Definitions

"Halogen" means fluorine, chlorine, bromine or iodine.

"Cycloalkyl" means a cyclic aliphatic hydrocarbon group, which may be monocyclic or polycyclic, optionally substituted. When the group is polycyclic, i.e. when it comprises more than one ring, the rings may advantageously be condensed in pairs or joined together in pairs by bonds. The cycloalkyl group is for example a monocyclic hydrocarbon group having a number of carbon atoms greater than 2, preferably from 3 to 24, more preferably from 4 to 12, preferably a cyclopentyl, cyclohexyl, cycloheptyl, cyclooctyl or cyclododecyl group, or a polycyclic (bi- or tricyclic) group having a number of carbon atoms greater than 3, preferably from 6 to 18, such as for example the adamantyl, norbornyl or isopinocampheyl groups.

"Alkyl" means a linear or branched, saturated hydrocarbon group containing from 1 to 12 carbon atoms, notably a methyl, ethyl, isobutyl, octyl or dodecyl group. The alkyl group preferably has from 1 to 10 carbon atoms, and even more preferably from 1 to 4 carbon atoms. Examples of preferred alkyl groups are notably the methyl, ethyl, propyl, isopropyl, butyl, isobutyl and *tert*-butyl groups.

"Heteroalkyl" group means a linear or branched hydrocarbon-containing chain having from 2 to 15 carbon atoms interrupted by one or more heteroatoms such as N, S or O. The heteroalkyl group may in particular be selected from the polyalkylene-oxy groups, the alkoxy groups and the alkylamino groups.

"Alkenyl" means a linear or branched unsaturated hydrocarbon group, containing from 2 to 14 carbon atoms, notably a vinyl, isopropenyl or butenyl group.

"Aryl" means a carbocyclic group with 6 to 20 ring members, mono- or polycyclic, containing conjugated double bonds. Examples of aryl groups are phenyl and naphthyl.

"Heteroaryl" means a mono- or polycyclic aromatic group, each ring of which contains from 3 to 6 ring members and of which at least one ring member contains a heteroatom, notably a thiophenyl, pyridinyl, pyrrolyl, furanyl, indolyl, thiophenyl, benzofuranyl, benzothiophenyl, imidazolyl, oxazolyl, thiazolyl, pyrazolyl, isoxazolyl, isothiazolyl, quinolinyl, isoquinolinyl group.

"Carbocycle" means a mono- or polycyclic hydrocarbon group, which may be a saturated or unsaturated aliphatic group or an aromatic group, containing from 5 to 20 carbon atoms, in particular an indenyl group.

"N-heterocyclic carbene or NHC" means a cyclic saturated or unsaturated carbene containing at least one nitrogen, and optionally a sulphur or oxygen atom. The said nitrogen can be substituted. Examples of NHC are normal N-heterocyclic carbenes, abnormal N-heterocyclic carbenes (aNHC), cyclic alkylamino carbenes (CAAC), triazolylidene.

"N-heteroacyclic carbene" means an acyclic carbene containing at least one nitrogen, and optionally a sulphur or oxygen atom in the main chain. The said nitrogen can be substituted. Examples of N-heteroacyclic carbenes are acyclic diaminocarbenes (ADC), acyclic aminocarbenes (AAC), acyclic aminooxy carbenes (AAOC).

### Polyolefin

This invention pertains to a composite material comprising inclusions of a polyolefin, and more specifically a polyolefin obtainable by ROMP of at least one cycloolefin.

By "cycloolefins" it is meant monocyclic or polycyclic compounds, optionally bridged or fused, having at least one carbon-carbon double bond and which may be substituted by at least one alkyl or alkenyl group, and optionally functionalized. The cycloolefin is advantageously selected from bridged or fused cycloalkenes, non-bridged cycloalkenes, and mixtures thereof.

The bridged or fused cycloalkenes are generally the reaction products of a conjugated diene with a dienophile such as an alkene or alkyne (Diels-Alder reaction). Cyclopentadiene (CPD) is an example of compound which acts both as a diene and as a dienophile. Fused cycloalkene thus comprise CPD oligomers such as dicyclopentadiene (DCPD), tricyclopentadiene (TCPD), tetracyclopentadiene (TeCPD) and the like, but also norbornene and norbomadiene.

The non-bridged cycloalkenes may notably be selected from cyclopentene, cyclohexene, cycloheptene, cyclooctene (COE), cyclododecene and cyclooctadiene (COD).

Examples of substituted cycloolefins are vinyl norbornene (VNB), ethylidene norbornene (ENB) and alkyl norbornenes (such as decylnorbomene, octylnorbornene, hexylnorbornene, tolylnorbornene).

Among the above cycloolefins, dicyclopentadiene or mixtures thereof with at least one other cycloolefin are preferred for use in this invention. The other cyclolefin may be selected from: tricyclopentadiene (TCPD), norbornene, vinyl norbornene (VNB), ethylidene norbornene (ENB), norbornadiene, cyclopentene, cyclohexene, cycloheptene, cyclooctene, cyclododecene, cyclooctadiene, decylnorbomene, octylnorbornene, hexylnorbornene, tolylnorbomene and mixtures thereof, preferably tricyclopentadiene (TCPD), vinyl norbornene (VNB), ethylidene norbornene (ENB), cyclooctadiene (COD) and/or cyclooctene (COE).

The mixtures of cycloolefins make it possible to adjust the properties of the material. When DCPD is mixed with one or more other cycloolefins, the molar ratio of DCPD to the total number of moles of these other cycloolefins may be for example between 0.01:1 and 100:1, for example between 0.1:1 and 50:1, more particularly between 1:1 and 15:1.

Hereinafter, the term "cycloolefin" refers to both a single cycloolefin and a mixture of different cycloolefins. It must therefore be understood as being equivalent to "one or more cycloolefins".

### Metathesis catalyst

As pointed out above, the cycloolefin is reacted, in the method according to the invention, with at least one metathesis catalyst, optionally *in-situ* reconstituted, which generally comprises group VIII, group VII, group VI or group V metal complexes and preferably iron, rhenium, vanadium, ruthenium, tungsten, tantalum, osmium and molybdenum complexes, and more preferably one or more ruthenium alkylidene complexes.

Examples of molybdenum catalysts are Schrock's catalysts presented below:

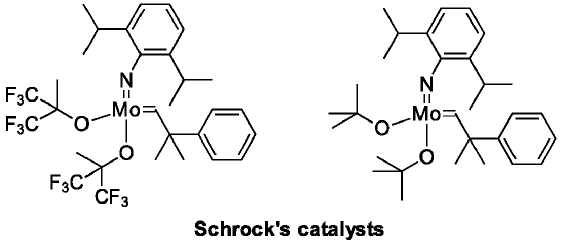

"Ruthenium alkylidene complex" refers to a penta- or hexa-coordinated ruthenium complex comprising an alkylidene ligand. Examples of ruthenium alkylidene complexes are M101, M102, M202, M204, M207, M300, M310, M350, M520 (Umicore Grubbs catalysts), M720, M711 (Umicore Hoveyda-Grubbs catalysts), CatMETium RF1, CatMETium RF4 (Evonik), nitro-Grela, and UltraLatMet (Apeiron Synthesis).

| | | |
|---|---|---|
| 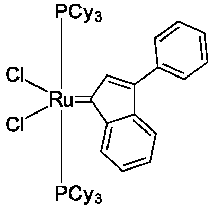 | 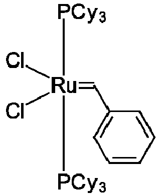 | 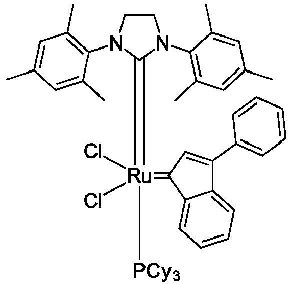 |
| Umicore Grubbs Catalyst M101 | Umicore Grubbs Catalyst M102 | Umicore Grubbs Catalyst M202 |
| 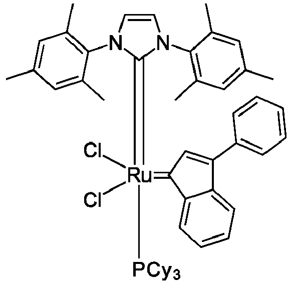 | 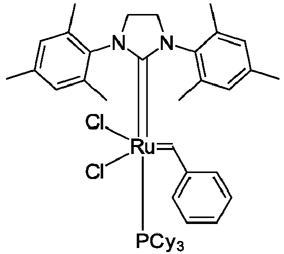 | 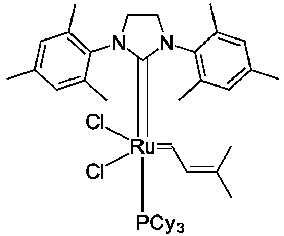 |
| Evonik catMETium RF1 | Umicore Grubbs Catalyst M204 | Umicore Grubbs Catalyst M207 |
| 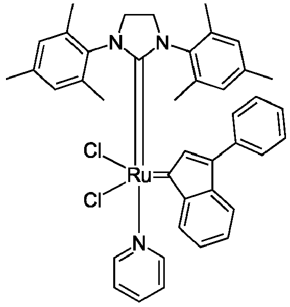 | 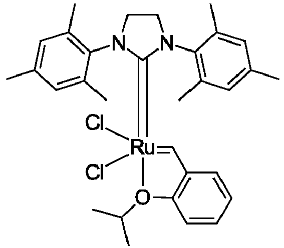 | 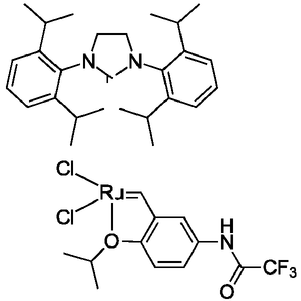 |
| Umicore Grubbs Catalyst M310 | Umicore Hoveyda-Grubbs Catalyst M720 | Umicore Hoveyda-Grubbs Catalyst M711 |
| 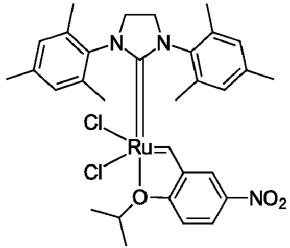 | 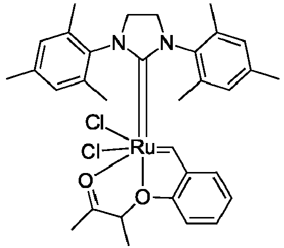 | 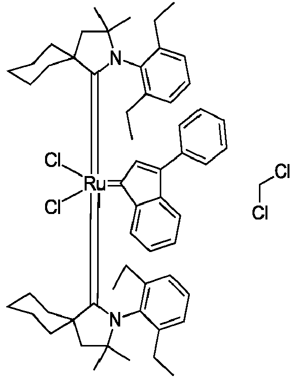 |
| Apeiron nitro-Grela | Grubbs catalyst M520 | Apeiron UltraLatMet |
| 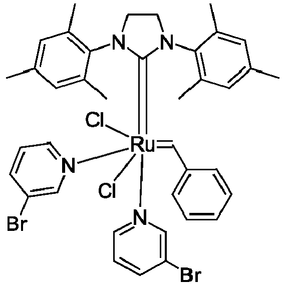 | 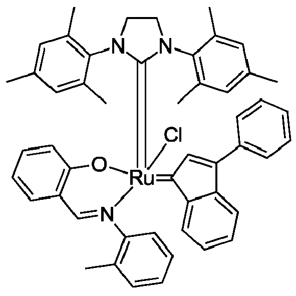 | 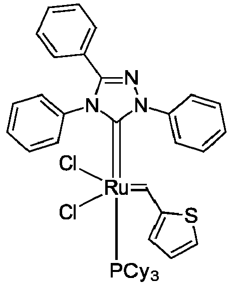 |
| Grubbs Catalyst M300 | Umicore Grubbs catalyst M350 | Catmetium RF4 |

| | | |
|---|---|---|
| where: PCy3 denotes a tricyclohexylphosphine group | | |

According to an embodiment of this invention, the ruthenium alkylidene complex may comprise at least one *N*-Heterocyclic Carbene (NHC), or else at least one N-heteroacyclic carbene, as a ligand, and preferably one or two imidazolin-2-ylidene ligands, more preferably one or two 1-aryl-3-cycloalkyl-imidazolin-2-ylidene ligands, coordinated to the ruthenium atom, in addition to a monodentate, bidentate or tridentate alkylidene ligand. In a preferred embodiment of the invention, the two imidazoline-2-ylidene ligands are two identical 1-aryl-3-cycloalkyl-imidazoline-2-ylidene ligands. In another embodiment of the invention, the two imidazoline-2-ylidene ligands consist of a 1-aryl-3-cycloalkyl-imidazoline-2-ylidene ligand and a 1,3-diaryl-imidazoline-2-ylidene ligand. It is understood that the aryl, imidazolinyl and cycloalkyl groups of the imidazoline-2-ylidene ligands can optionally be substituted. In the case of the 1,3-diarylimidazoline-2-ylidene ligand, the substituents carried by the two aryl groups can be identical or different and are preferably identical, so that the ligand is symmetrical. The additional ligands in the ruthenium complex can for example be chosen from the group consisting of:
- uncharged ligands, notably of the nitrogen or phosphorus-containing type such as trialkylphosphines, tricycloalkylphosphines and triarylphosphines, in particular tricyclohexylphosphine or triphenylphosphine, or trialkylphosphites or pyridines and/or
- anionic ligands, such as halides, in particular chlorides.

The ruthenium complex used according to the invention preferably corresponds to the following formula (1): 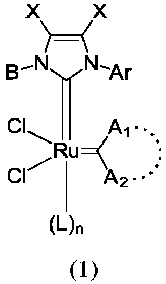 in which:
X denotes a hydrogen or halogen atom or an alkyl or aryl group,
B denotes a cycloalkyl group,
Ar represents an aryl group optionally substituted with at least one substituent selected from: halogen atoms, a trifluoromethyl group, a nitro group, alkyl groups, heteroalkyl groups, alkylammonium groups, and aryl groups substituted with one or more alkyl groups,
L denotes a neutral ligand,
A1 represents a hydrogen atom,
A2 represents an alkyl or alkenyl group, an aryl group or a heteroaryl group,
or else A1 and A2 together form a carbocycle optionally substituted with at least one group selected from the alkyl, heteroalkyl and aryl groups,
n is an integer and has a value of 1 or 2.

The groups X preferably each represent a hydrogen atom.

B is preferably selected from the group consisting of cyclopropyl, cyclobutyl, cyclopentyl, cyclohexyl, cycloheptyl, cyclooctyl, cyclodecyl, cyclododecyl, cyclopentadecyl and isopinocampheyl. More preferably, B is cyclohexyl.

In an embodiment, Ar is selected from a phenyl group substituted with at least one group selected from: chlorine or fluorine atoms, a trifluoromethyl group, a nitro group, a methyl or isopropyl group, a methoxy group, an alkylammonium group and a tolyl group. Still preferably, Ar is selected from the group consisting of 2,4,6-trimethylphenyl, 2,6-diisopropylphenyl, 2,4,6-tris(trifluoromethyl)phenyl, 2,4,6-trichlorophenyl and hexafluorophenyl. Better still, Ar is 2,4,6-trimethylphenyl, also denoted by "mesityl".

In one embodiment, L is a phosphorus-containing ligand, in particular of formula P(R¹)₃, in which P is a phosphorus atom and R¹ is selected from the groups R² and (OR²) in which the groups R² are identical or different and are selected from the hydrogen, halide, alkyl, cycloalkyl, aryl and arylalkyl groups, substituted or unsubstituted, each of the groups comprising up to 20 carbon atoms, and the substituents of said groups being selected from the halides, the alkyl groups and the aryl groups having up to 20 carbon atoms. The aforementioned alkyl, aryl and cycloalkyl groups are as defined above. Much preferably, L is a triaryl or a trialkyl or a tricycloalkyl phosphine. An example of trialkyl phosphine is triisopropylphosphine. The tricycloalkyl phosphine may in particular be selected from the tricyclohexylphosphines and the tricyclopentylphosphines. The triaryl phosphine may notably be selected from triphenylphosphine, tri(methylphenyl)phosphine, trimesitylphosphine, tri(dimethylphenyl)phosphine and tri[(trifluoromethyl)phenyl]phosphine. As a variant, the ligand L may be a dialkyl or a dicycloalkyl phosphine selected for example from dicyclohexylphosphines, di-*tert*-butylphosphines, di-*tert*-butylchlorophosphines and 2-isobutyl-2-phospha-bicyclo-[3.3.1]nonane. Very preferably, L is a tricyclohexylphosphine group.

Alternatively, L may be a group (L1): 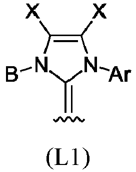 where B, Ar and X are as defined above.

It will be understood that when the integer n has a value of 2, the ligands L may be different from one another or identical to one another. In one embodiment of the invention, n has a value of 1 and L is a phosphine trisubstituted with an alkyl or aryl group, a phosphite trisubstituted with an alkyl or aryl group or a group (L1). In another embodiment, n has a value of 2 and each ligand L is a pyridine, which is optionally substituted.

In one embodiment of the invention, A2 represents a vinyl, methyl, thiophenyl or phenyl group. In another embodiment, A1 and A2 together form an indenylidene group, optionally substituted.

Preferably, the complex of formula (1) corresponds to one of the following formulas (1a) and (1b) or mixtures thereof: 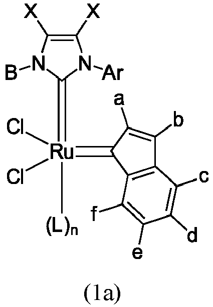 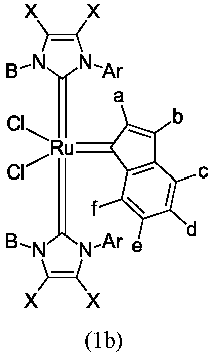 in which B, Ar and X are as defined above; L is a phosphorus-containing uncharged ligand as defined above; a, b, c, d, e and f are selected independently of one another from the group consisting of a hydrogen atom, an alkyl group, a heteroalkyl group and an aryl group, or a and b may form together a hydrocarbon ring optionally substituted by at least one group selected from alkyl, halogeno and alkoxy; n is an integer and has a value of 1 or 2.

Preferably, a, c, d, e and f represent a hydrogen atom and b represents a phenyl group.

It will be understood that when the integer n has a value of 2, the ligands L may be different from one another or identical to one another. Preferably, n has a value of 1.

Preferred examples of metathesis catalysts that may be used according to the invention are illustrated below.

| | | |
|---|---|---|
| 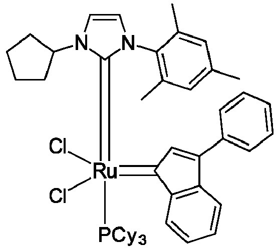 | 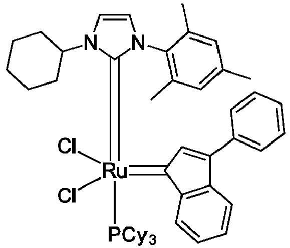 | 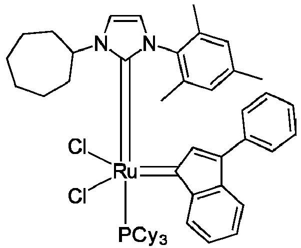 |
| 897 | 911 | 925 |
| 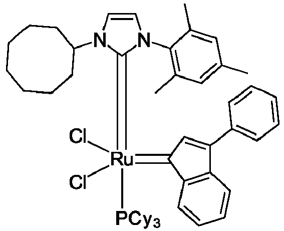 | 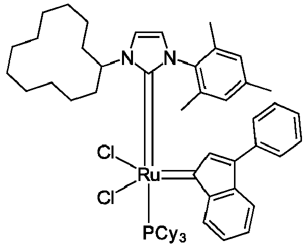 | 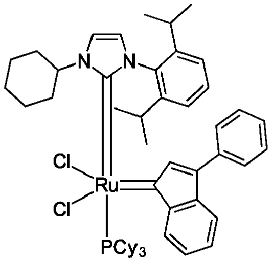 |
| 939 | 996 | 953 |
| 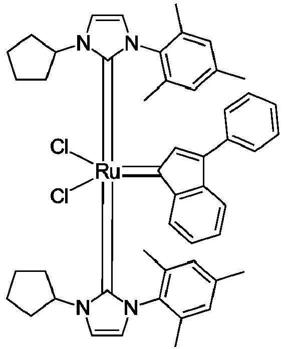 | 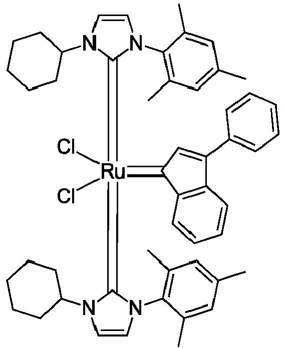 | 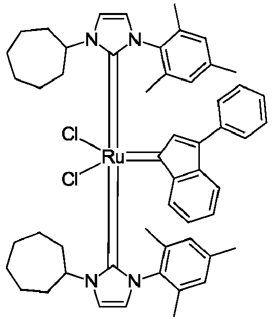 |
| 870 | 899 | 927 |
| 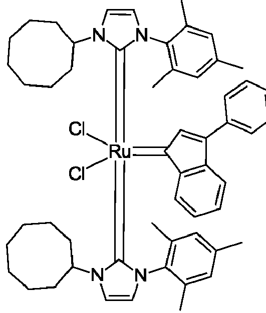 | 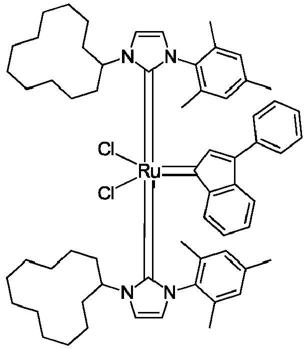 | 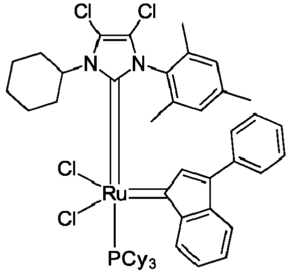 |
| 955 | 1067 | 979 |
| 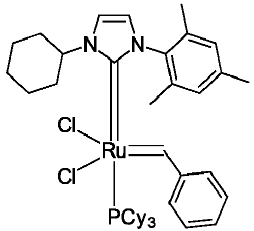 | 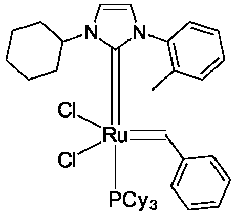 | 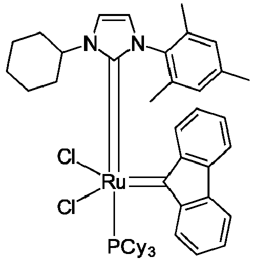 |
| 791 | 763 | 885 |
| 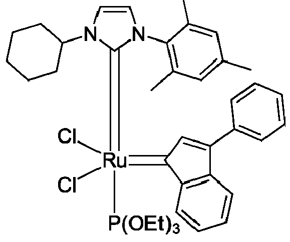 | 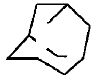 | 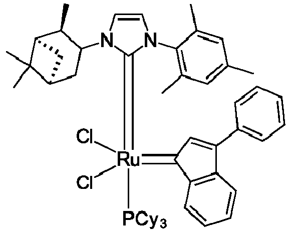 |
| 795 | 962 | 964 |
| 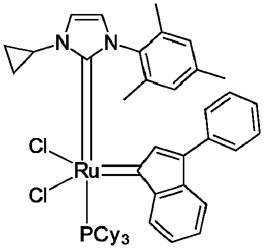 | | |
| 867 | | |

| | | |
|---|---|---|
| where: PCy3 denotes a tricyclohexylphosphine group and P(OEt)₃ denotes a triethylphosphite group. | | |

The ruthenium complex used according to the invention may notably be prepared by the method described in patent application WO2014/091157, starting from a 1,3-disubstituted imidazolium salt and a ruthenium complex precursor, such as the complexes PI, P2 or P3 shown below. 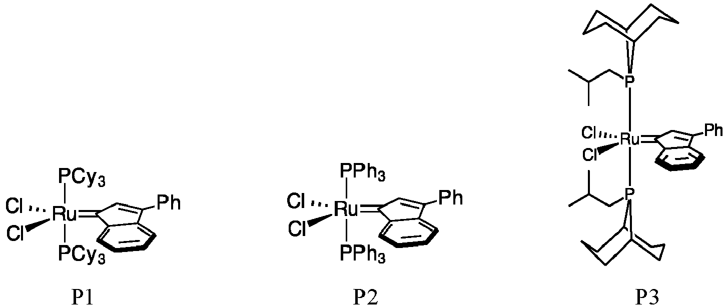 where: Ph denotes a phenyl group, PCy3 denotes a tricyclohexylphosphine group and PPh₃ denotes a triphenylphosphine group.

The imidazolium salt may itself be prepared as described in WO 2014/091156 or in WO 2020/037135.

In a preferred embodiment, the method of the invention is carried out in the presence of a complex of formula (1b), alone or mixed with a complex of formula (1a) preferably having the same groups Ar, B and X. The molar ratio of the complex of formula (1a) to the complex of formula (1b) is advantageously between 99:1 and 1:99, and preferably between 5:95 and 95:5. Better still, the molar ratio of the complex of formula (1a) to the complex of formula (1b) is between 20:80 and 80:20.

Hereinafter, "metathesis catalyst" will denote both a single catalyst or a mixture of catalysts.

In the method according to the invention, the total amount of metathesis catalyst relative to the cycloolefin, expressed in weight, may be for example between 1 and 100 000 ppm, preferably between 10 and 10 000 ppm.

Under some circumstances, especially in the case when a metathesis catalyst of formula (1b) is used, alone or mixed with a metathesis catalyst of formula (1a), the method according to the invention further comprises activating these latent metathesis catalysts of formula (1b). Activation may be performed by electromagnetic-wave initiation, for example by using UV or laser irradiation optionally in the presence of a photo-initiation activator as 2-(4-methoxystyryl)-4,6-bis(trichloromethyl)-1,3,5-triazine, N-hydroxynaphthalimide triflate tetraphenylborate dimesitylimidazolium salt or 2-isopropylthioxanthone. Alternatively, activation may be performed thermally by heating to a temperature in the range from 30 to 180 °C and/or by adding a metathesis activator to the reaction mixture. It is also possible to combine several of these modes of activation, for example heating the metathesis catalyst in an acidic medium.

According to a preferred embodiment, the reaction mixture may comprise at least one metathesis activator. This metathesis activator enables the activation of the metathesis catalyst and allows the polymerization of the cycloolefin to proceed with high yield even at relatively low temperatures. Various metathesis activators, especially metal complexes, may be used, such as metal complexes having at least one organic ligand such as copper or ruthenium complexes having at least one organic ligand as SIPᵣCuCl where SIPᵣ designates 1,3-bis-(2,6-diisopropylphenyl)-2-imidazolidinylidene, and RuCl₂(PPh₃)₃, where PPh₃ designates a triphenylphosphine group; or an acidic metathesis activator such as Lewis acids, notably the halides of gold, of copper, of silver, of manganese, of iron, of magnesium, of zinc, of boron, of ruthenium or of aluminium or the compounds of formula ZnR₂, SnR₂, SnR₄ and SiR₄ where the groups R denote, independently of one another, a halogen atom or an alkyl, cycloalkyl, alkenyl, phenyl or benzyl group, as defined above; or an acidic metathesis activator selected from the Bronsted acids such as organic or inorganic acids, notably hydrochloric acid, hydrobromic acid, iodic acid, hydrofluoric acid, sulfuric acid, nitric acid, periodic acid, the sulfonic acids such as methane sulfonic acid, the mono- and polycarboxylic acids. The Lewis acid is preferably selected from AuCl, CuCl, SiCl₄ and PhSiCl₃. where Ph designates a phenyl group, more preferably CuCl. The Bronsted acid is preferably hydrochloric acid. It should be noted that some of these metathesis activators may also be used as a cross-linking catalyst, such as SiCl₄ and PhSiCl₃. It is thus possible to use fewer reactants in the process of this invention, which is both economically and environmentally beneficial.

Hereinafter, "metathesis activator" will denote both a single or a mixture of activators.

The molar ratio of metathesis activator relative to the total amount of metathesis catalyst may range from 0.01:1 to 500:1, preferably from 0.1:1 to 100:1.

Preferred metathesis activators are acidic metathesis activators. The molar ratio of acidic metathesis activator to the metathesis catalyst preferably ranges from 0.1:1 to 500:1, more preferably from 0.5:1 to 100:1. The skilled person will be able to adjust the amount of metathesis activator used. For instance, in the case of a Lewis acid, the molar ratio of the acid to the metathesis catalyst may range from 0.2:1 to 5:1, whereas it may range from 5:1 to 500:1 in the case of a Bronsted acid.

Alternatively or in addition, the reaction mixture may comprise at least one metathesis retardant, in the case where the polymerization of the cycloolefin should be delayed long enough to fill a mold with the reaction mixture on an industrial scale or manage crosslinking kinetics of polymers, enabling to tune material morphology and properties. This is especially useful in the manufacture of large pieces by casting, RIM (Reaction Injection Molding) or when molding is performed by RTM (Resin Transfer Molding) which requires a filling time of the mold comprised between 30 seconds to several hours. Finally, delaying the polymerization is also beneficial in the case where the polymerized cycloolefin is intended to impregnate a fibrous matrix so as to form reinforced parts.

Examples of metathesis retardants that may be used for this purpose are Lewis bases, electron donors or nucleophiles. Preferred metathesis retardants are phosphites of formula P(OR)₃ and phosphines of formula PR₃ where the R groups independently represent H, alkyl, cycloalkyl, heteroaryl, aryl optionally substituted by one or more groups selected from halogen atoms and alkyl groups. Alternatively, two R groups may form together a ring optionally substituted by a -(R'O)₂POR" group where the R' and R" groups independently represent H, alkyl, cycloalkyl, heteroaryl, aryl optionally substituted by one or more groups selected from halogen atoms and alkyl groups. Preferably, R is an alkyl group, notably ethyl, or phenyl substituted by an alkyl group such as a methyl, ethyl, isopropyl or nonyl group. Preferred examples of metathesis retardants are triphenylphosphine, tributylphosphine, tricyclohexylphosphine, triphenylphosphite, triethylphosphite, tri-n-butylphosphite and tri(nonylphenyl)phosphite. Other metathesis retardants may be selected from nitrogen-containing compounds such as pyridine, DMAP, benzonitrile and from hydroperoxydes.

Hereinafter, "metathesis retardant" will denote both a single or a mixture of retardants.

The molar ratio of the metathesis retardant to the metathesis catalyst is advantageously comprised between 1:1000 and 1000:1, preferably between 100:1 and 1:100 and more preferably between 10:1 and 1:10 and may be easily adjusted by the skilled artisan depending on the metathesis retardant used.

Once delayed, the reaction may be reactivated either thermally or using electromagnetic wave such as UV, infrared, or visible light or by introducing at least one of the above metathesis activators into the reaction mixture.

It was observed that the metathesis catalysts of formula (1a) and (1b) allowed the method according to the invention to be carried out in an open mold. Combining the metathesis catalysts of formula (1a) and (1b) makes it possible to benefit from the stability of one and the reactivity of the other to obtain a synergistic mixture.

### Silicone matrix

"Silicone matrix", as used herein, means the continuous phase in a composite material. For polymer blend it means the continuous polymer phase embedding the dispersed one. According to this invention, the silicone matrix preferably comprises or consists of a silicone elastomer. In the context of this description, "Elastomer" means a crosslinked polymer being in its rubbery state at room temperature, conventionally having associated elastic properties.

The cross-linking agent is able to react with said silicone resin through hydrolytic or non-hydrolytic condensation or dehydrocoupling reaction so as to produce a cross-linked material, i.e. the silicone matrix.

The silicone resin is an organosilicon compound preferentially comprising an organopolysiloxane backbone, preferably an organopolysiloxane having at least two polar groups, such as epoxide, halogeno, carbinol, isocyanate, cyanoacrylate, acrylate, anhydride, amino, thiol, hydroxyl, fluoroalkyl or mercaptoalkyl groups per molecule, preferably two hydroxyl groups, more preferably forming two terminal silanol groups. The organopolysiloxane backbone is preferably a polydialkylsiloxane backbone wherein the alkyl groups may be linear or branched and comprise from 1 to 14 carbon atoms, some of which may be replaced or substituted by vinyl and/or an aryl group such as a phenyl group. A typical example of polydialkylsiloxane is polydimethylsiloxane. A preferred silicone resin according to this invention is thus polydimethylsiloxane with at least two hydroxyl groups, preferably forming silanol-terminated polydimethylsiloxane. It will be referred to in this description as "PDMS-OH". These preferred silicones are conventionally referred as Room Temperature Vulcanizing (RTV) silicones. The molecular weight of the silicone resin may range from 150 to 10,000,000 g/mol and preferably from 1,000 to 150,000 g/mol, more preferably from 3,000 to 50,000 g/mol.

According to this invention, the silicone resin may be a mixture of two or more different silicone resins, or two or more silicone resins having the same silicone backbone but with different molecular weights, or mixtures thereof.

The cross-linking agent enables to form a silicone network through hydrolytic or non-hydrolytic reaction and thus results in a cross-linked material. It is typically a multifunctional silane Si-X which is able to react with the hydroxyl groups of the silicone resin to form a Si-O-Si linkage.

Examples of multifunctional silanes useful as cross-linking agents are silanes bearing at least two and preferably three or four groups independently selected from acetoxy, enoxy, chloro, oxime, alkoxy, amine, benzamido and alkoxyamino groups, preferably silanes bearing alkoxy or acetoxy groups. The silane may also include at least one non-reactive substituent such as an alkyl group, typically a methyl or ethyl group. In another embodiment, the cross-linking agent may be a polymer, for instance a polyalkoxysiloxane such as polydiethoxysiloxane, an epoxypolysiloxane, a mercaptopolysiloxane or a polyhydrogenosiloxane. In still another embodiment, the cross-linking agent may contain other electrophilic functions enabling condensation or dehydrocoupling reactions as epoxide, chlorine, carbinol (ester, ether), isocyanate, cyanoacrylate, acrylate, anhydride, amine, thiol, hydrogen, hydroxyl. In still another embodiment, the cross-linking agent may be selected from other metalates including metal alkoxides such as alkoxides of boron, aluminium, sodium, titanium, tin, lead, phosphorus or zirconium, and mixtures thereof.

Preferably, the crosslinking agent is selected from the group consisting of: silanes bearing at least two and preferably three or four groups independently selected from acetoxy, enoxy, chloro, oxime, alkoxy, amine, benzamido and alkoxyamino groups, preferably silanes bearing alkoxy or acetoxy groups, wherein the silane may also include at least one non-reactive substituent such as an alkyl group, typically a methyl or ethyl group; titanium, aluminium or zirconium metalates ; and mixtures thereof.

Examples of crosslinking agents are di-*t*-butoxy diacetoxysilane, diacetoxydimethylsilane, ethyltriacetoxysilane, methyltriacetoxysilane, bis(triethoxysilyl)ethane, methyltriethoxysilane, methyltrimethoxysilane, tetramethoxysilane (TMOS), tetraethoxysilane (TEOS), dimethoxydimethylsilane, tetra-*n*-propoxysilane, vinyltriisopropenoxysilane, methyltris(methylethylketoximino)silane, vinyltris(methylethylketoximino)silane, bis(*N-*methylbenzamido)ethoxymethylsilane, tris(cyclohexylamino)methylsilane, tetrachlorosilane, dichlorodimethylsilane, titanium tetra(isopropoxide), titanium tetra(2-ethylhexoxide), titanium diisopropoxide bis(ethylacetoacetate), titanium(diisopropoxide) bis(2,4-pentanedionate), aluminium tris(isopropoxide), zirconium tetra(isopropoxide).

Hereinafter, "cross-linking agent" will denote both a single or a mixture of cross-linking agents.

The molar ratio of functional groups of the cross-linking agent to the functional polar groups, particularly OH groups of the silicone resin may range from 1:20 to 100:1 and preferably from 1:10 to 10:1.

The cross-linking reaction may require use of condensation or dehydrocoupling catalysts and/or accelerators, especially in the case where the cross-linking agent is for example an alkoxysilane. These catalysts are referred to "cross-linking catalyst(s)" in this description. The process of this invention may thus be conducted in the presence of these compounds. Suitable catalysts are amines, guanidine derivatives and carboxylic acid salts of many metals, such as Pb, Zn, Zr, Sb, Fe, Cd, Sn, Ba, Ca, Ti and Mn, particularly the naphthenates, octoates, hexanoates, laurates, and acetates. Preferred catalysts for use in this invention are zinc and tin complexes and more preferably Sn(II) and Sn(IV) complexes such as dialkylester tin, tetralkyl tin, dialkyldialkoxy tin, dialkyldiacetylacetonato tin, dialkyldialkylester tin, dialkylalkylester-hydroxy tin, and dialkylalkoxyhalogeno tin. Examples of such zinc or tin complexes are zinc 2-ethylexanoate, bis (2,4-undecanedionate) zinc, bis (2,4-pentanedionato) zinc, bis(2-ethylhexanoate) tin, bis(neodecanoate) tin, di-*n*-butylbis(2-ethylhexylmaleate) tin, di-(*n*-butylbis(2,4-pentanedionate)) tin, di-(*n*-butylbutoxy-chloro) tin, di-(*n*-butyldiacetoxy) tin, di-(n-butyldilauryl) tin, dimethyldineodecanoate tin, dimethylhydroxy(oleate) tin and dioctyldilauryl tin.

Bases enabling thiol, amine or hydroxyl function deprotonation such as potassium tert-amylate can also be used to favor the condensation reaction.

Hereinafter, "cross-linking catalyst" will denote both a single or a mixture of catalysts.

The cross-linking catalyst may represent from 10 to 100,000 ppm and preferably from 50 to 10,000 ppm, more preferably from 100 to 5,000 ppm, relative to the total weight of silicone resin.

The cross-linking reaction may require moisture, a hydroxide source or a condensation initiator to start silicone polymerization and silane hydrolysis, as for acetoxysilane cross-linking agents. The cross-linking initiator may be air water/moisture, an alcohol, an acid (aqueous or dry HCl or sulfuric acid), sodium hydrogen, carbonate or sulphite, hydrates of inorganic salts.

Hereinafter, "cross-linking initiator" will denote both a single or a mixture of initiators.

The cross-linking initiator may represent from 10 to 100,000 ppm and preferably from 50 to 10,000 ppm, more preferably from 100 to 5,000 ppm, relative to the total weight of silicone resin.

The weight ratio of the silicone resin to the cycloolefin may range from 40 to 99 wt.%. It was verified that the silicone resin is miscible with the cycloolefin, before crosslinking. After crosslinking, a silicone matrix is obtained. The weight ratio of the silicone to the polyolefin may range from 40:60 to 99:1, preferably from 45:55 to 95:5 and more preferably from 50:50 to 95:5.

### Additional components

The method of this invention may be carried out in the presence of one or more additives capable of improving the properties of the material and/or the reaction yield.

These additives may be selected from chain-transfer agents, compatibilizers, fillers, solvents and mixtures thereof.

Chain-transfer agents (CTA) are compounds containing a carbon-carbon double bond out of a ring, preferably compounds containing a terminal carbon-carbon double bond, and more preferably compounds only made of carbon and hydrogen atoms (i.e. hydrocarbons), that may be used to control ROMP polymerization and final material properties, including alkenes such as hexene, octene, decene and/or vinyl norbornene (VNB). The molar ratio between the cycloolefin and the CTA may typically range from 10:1 to 1000:1.

Compatibilizers are compounds which are able to both react with the metathesis catalyst and with the crosslinking agent by condensation or dehydrocoupling reaction, and/or bearing functions having affinity toward both polymer phases, such as functionalized cycloolefins as hydroxyl or maleic anhydride functionalized norbornene, compounds such as allylglycidylether, alkenols, or compounds bearing both a polar function as alcohol or isocyanate and a terminal olefin or a non-polar backbone, and vinyl- or norbornene-functionalized organosilanes-siloxanes.

Fillers may be selected from organic and inorganic fillers and mixtures thereof, such as silicon carbide, glass beads or bubbles; calcium carbonate; silica particles; carbon blacks; carbon nanotubes; graphene nanoplatelets; boron nitride, cellulose nanocrystals; silicates and aluminosilicates such as talc, mica and clays; glass, ceramic, carbon, vegetable, metal, rock fibers or polymeric fibers such as aramid or polyethylene; and mixtures thereof. The above fillers are preferably added in an amount ranging from 0.05 vol% to the maximum packing amount of the filler, for instance up to 95 vol%. In an embodiment, the fillers represent from 1 to 80 vol% and more preferably from 10 to 60 vol% relative to the total volume of the composite.

Other additives that may be used in this invention are non-reactive lubricants or plasticizers such as trimethylsiloxy-terminated PDMS polymers and diisodecylphthalate; pigments and/or dyes; antioxidants; oxygen scavengers; surfactants or amphiphilic polymers; flame retardants; UV absorbers; ageing and light stabilizers; impact modifiers; antistatic agents; release agents; swelling agents; antimicrobial agents and fungicides; heat stabilizers including metal oxides such as titanium, cerium or iron oxides and peroxides; hydrolysis stabilizers such as carbodiimide; adhesion promoters such as isocyanates, acrylates or silanes; and mixtures thereof.

In addition, the method according to the invention may be carried out in the absence or in the presence of a solvent, which may be any organic and/or aqueous solvents selected from the group consisting of: water; alcohols; aliphatic hydrocarbons, in particular *n*-hexane, isoparaffins and liquid paraffins; alicyclic hydrocarbons such as cyclohexane or dimethylcyclohexane; aromatic hydrocarbons such as benzene, toluene and xylene; azotized compounds such as acetonitrile; oxygenated compounds, in particular ketones such as acetone, ethers such as diethyl ether, esters such as ethyl acetate and oxygenated heterocycles such as tetrahydrofuran; halogenated compounds such as dichloromethane; water and mixtures thereof. For solvent mixture stability, emulsifying or phase transfer agents such as tetrabutylammonium bromide may be used. This method can preferably be carried out in the absence of solvent since the cycloolefin and/or the silicone resin may act as solvents for the other reactants. In addition, the cyclolefin may act as a solvent for the silicone resin.

### Method and kits

The method according to the invention is advantageously carried out at atmospheric or low pressure.

Contacting of the metathesis catalyst, the cycloolefin, the silicone resin, the cross-linking agent and the optional metathesis activator, metathesis retardant, crosslinking catalyst, crosslinking initiator and/or additives (hereafter referred to as "the reactants"), is generally performed under stirring or using mixing machines until a homogeneous mixture is obtained and more broadly under conditions for directly obtaining an object of the desired shape. Depending *inter alia* on the weight ratio of the silicone resin relative to the cycloolefin or on the desired final material properties, the mixture may then be heated or not. The reaction may thus be carried out at a temperature from -20 to 250 °C, preferably from 0 to 200 °C, for a time up to 30 days, preferably from 5 seconds to 48 h and more preferably from 10 seconds to 16 h.

In an embodiment the method according to the invention comprises contacting and mixing a first composition containing part or all of the cycloolefin and of the silicone resin and optionally a metathesis activator and/or a metathesis retardant and/or additive(s) and/or a cross-linking catalyst and/or cross-linking initiator, with a second composition containing the metathesis catalyst, the cross-linking agent and optionally the remaining of the cycloolefin and of the silicone resin and/or a metathesis retardant and/or additive(s), in conditions for directly obtaining an object of the desired shape.

In another embodiment the method according to the invention comprises contacting and mixing a first composition containing part or all of the cycloolefin and of the silicone resin and a cross-linking agent and optionally a metathesis activator and/or a metathesis retardant and/or additive(s) and/or a cross-linking catalyst with a second composition containing the metathesis catalyst and optionally the remaining of the cycloolefin and of the silicone resin and/or a metathesis retardant and/or additive(s) and/or a cross-linking catalyst and/or cross-linking initiator, in conditions for directly obtaining an object of the desired shape.

In another embodiment, the method according to the invention comprises contacting and mixing a first composition containing part or all of the cycloolefin and of the silicone resin, the metathesis catalyst, and optionally a metathesis retardant and/or additive(s), and/or a cross-linking catalyst and/or cross-linking initiator with a second composition containing the remaining of the cycloolefin and/or of the silicone resin, if any, the cross-linking agent and optionally a metathesis activator and/or a metathesis retardant and/or additive(s).

The first and second compositions are preferably mixed in a volume ratio between 500:1 to 1:500, more preferably in a volume ratio of 100:1 to 1:100, more preferably in a volume ratio of 50:1 to 1:50 and still more preferably in a volume ratio of 10:1 to 1:10.

In any case, contacting may be performed by a method selected from hand painting, spraying, machine or manual-casting, Reaction Injection Molding (RIM), Reinforced Reaction Injection Molding (R-RIM), Resin Transfer Molding (RTM), LFI (Long Fiber Injection), Vacuum Infusion Processing (VIP), pultrusion or filament winding, preferably by casting or RIM.

In any case, the fibers may be made from carbon, glass, ceramic, vegetables, rock, metal, or polymers such as aramid or polyethylene, for instance.

The metathesis catalyst, the metathesis retardant, the metathesis activator, the crosslinking agent, the crosslinking catalyst, the crosslinking initiator and the additives may each independently be in the form of a solid or a liquid, dispersed or solubilized in the cycloolefin and/or in the silicone resin and/or in a solvent.

The method according to the invention may be useful in the manufacture, for example, of parts of terrestrial, nautical or aerospace vehicles (in particular cars, tractors, trucks, trains, buses, airplanes and space shuttles), such as bumpers anti-vibration or dampening parts, protection for blades of wind turbines, sports articles (such as shoes), offshore installations (notably buoys and pipelines), coatings (including thermal insulation coatings, anti-corrosion paints, insulation covers or field joints), chemical equipment including containers, gaskets and pipes, sealants, adhesives, molds, water treatment equipment, camping equipment, military items such as bulletproof vests, electromagnetic shields,. As a variant, the material of the invention may be used for repairing cracks in masonry structures, notably in concrete, stone or brick. The method and/or kit of this invention are preferably used in the manufacture of offshore installations, sealants and coatings, more preferably in the manufacture of insulation coating for oil and gas production equipment.

### EXAMPLES

The invention will be better understood from the following examples, which are given purely for purposes of illustration and do not aim to limit the scope of the invention, which is defined by the accompanying claims.

### Materials and methods

### Cycloolefins:

DCPD/TCPD: dicyclopentadiene/tricyclopentadiene in a 90:10 weight ratio
ENB: ethylidene norbornene
COE: cyclooctene

### Metathesis catalysts:

899: the following catalyst (20-1,000 wt ppm) solubilized at 2 wt% in mineral oil or toluene or at 1.3 wt% in a mineral oil/water 67/33 wt% mixture added with tetrabutyl ammonium bromide (0.1 wt% relative to the solvent mixture)

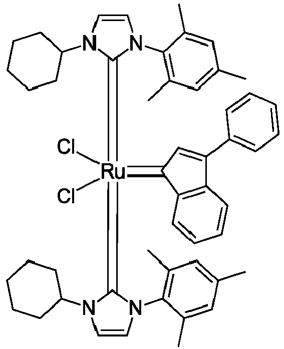

911/899: mixture (1,000 wt. ppm, 2wt.% in toluene) of the following 911 catalyst with 899 in 911:899 ratio of 70:30 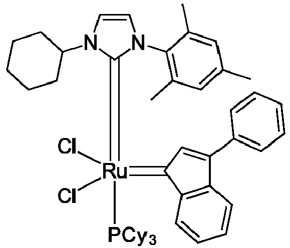 M101: Ruthenium catalyst manufactured by UMICORE and used at a concentration of 1,000 wt ppm as a 2 wt% solution in toluene, having the following structure:

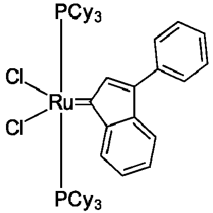

M204: Ruthenium catalyst manufactured by UMICORE used at a concentration of 1,000 wt ppm as a 2 wt% solution in toluene, having the following structure:

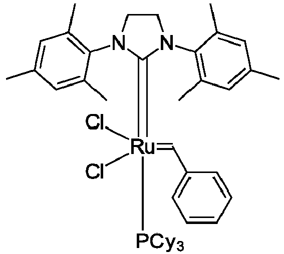

ULM: Ruthenium catalyst (UltraLatMet) available from APEIRON and used at a concentration of 1,000 wt. ppm as a 2 wt% solution in toluene, having the following structure:

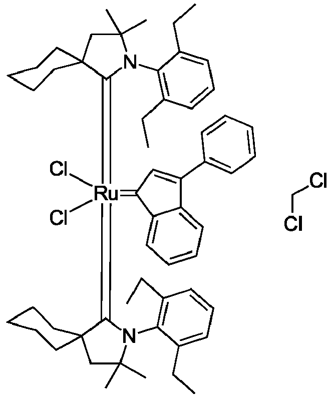

SCHROCK: Molybdenum catalyst used at a concentration of 2,500 wt ppm as a 2 wt% solution in anhydrous toluene, having the following structure: 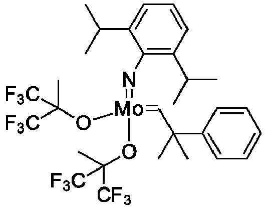
Activator: CuCl, in a molar ratio of 1:1 with the metathesis catalyst
Retardant: TPP (triphenylphosphine), in a molar ratio of 10:1 with the metathesis catalyst

### Silicone resins:

GP426: silanol-terminated polydimethylsiloxane purchased from Genesee Polymers
DMS-S27: silanol-terminated polydimethylsiloxane purchased from Gelest
DMS-C23: carbinol(hydroxyl) terminated polydimethylsiloxane purchased from Gelest
FMS5922: silanol-terminated polytrifluoropropylmethylsiloxane purchased from Gelest
DMS-S33: silanol-terminated polydimethylsiloxane purchased from Gelest

### Crosslinking agents:

TMOS: tetramethoxysilane, blended with the silicone resin in a OR/OH ratio of 2.8-3.0
TEOS: tetraethoxysilane, blended with the silicone resin in a OR/OH ratio of 4.6-4.8
MTAS: methyltriacetoxysilane, blended with the silicone resin in a OR/OH ratio of 9.6-10.4
ETAS: ethyltriacetoxysilane, blended with the silicone resin in a OR/OH ratio of 1.0-9.3
VTPS: vinyltriisopropenoxysilane, blended with the silicone resin in a OR/OH ratio of 15.2
pMDI: polymethylene diphenyl diisocyanate (Mn ~400 and ~3.2 isocyanate groups/molecule), blended with the silicone resin in a NCO/OH ratio of 3.1
HMS301: methylhydrosiloxane / dimethylsiloxane copolymer in aH/OH ratio of 5.5, purchased from Gelest
MCT-EP13 : Monophenyl functional tris(epoxy terminated polydimethylsiloxane) purchased from Gelest, blended with the silicone resin in a EP/OH ratio of 5.5
SIM7590.0 : Methyltris(methylethylketoximino)silane purchased from Gelest, blended with the silicone resin in a OR/OH amount of 10.1
SIB1610.0: bis(N-methylbenzamido)ethoxymethylsilane purchased from Gelest, blended with the silicone resin in a OR/OH ratio of 10.2

### Cross-linking catalysts (or metal alkoxide):

Sn: Sn bis(2-ethylhexanoate)
Ti: titanium tetra(2-ethylhexoxide)
Al: aluminium tris(ethoxide)

### Additives:

Fillers: SIS6962-0: hexamethyldisilazane-treated fumed silica purchased from Gelest (10-30 wt% relative to silicone), or S32: glass microbubbles supplied by 3M (30 wt% relative to silicone)
Antioxidants: Irganox 1010 purchased from BASF or Ethanox 4702 purchased from Harwick (1-2 wt% relative to cycloolefin)
CTA: chain-transfer agent (octene) (1 mol% relative to cycloolefin)
Comptabilizers: NBE-TEOS or AGE (allylglycidyl ether) (1 mol% relative to cycloolefin)
Heat stabiliser: Fe₂O₃ (5 wt% relative to silicone)
Base: Potassium tert-amylate (1 molar equivalent relative to OH functions of silicone)

### Preparation process:

Component A is prepared, which comprises: (a) the silicone resin, (b) either the crosslinking agent or the cross-linking catalyst, (c) either the cyclolefin together with the activator (if present), or the metathesis catalyst with the retardant (if present), and optionally one or more additives.

Separately, Component B is prepared, that comprises the compounds (b) and (c) which are not included within Component A, and optionally one or more additives.

Components A and B are then mixed together and immediately cast into a mold, using the following protocols:
P1: mold at room temperature, reactive medium maintained for 18-26 h within the mold, then at 180 °C for about one hour
P2: mold at 80 °C, reactive medium maintained for about one hour at 80 °C within the mold, then for 18-26 h at room temperature, then at 180°C for about one hour
P3: mold at 60 °C, reactive medium maintained for about one hour at 60 °C within the mold, then for 18-26 h at room temperature
P4: mold at 180 °C, reactive medium maintained for about one hour at 180 °C.

The product thus obtained is removed from the mold.

### Properties:

The properties of the materials prepared following the procedure described before were determined.

Viscosity was measured before cross-linking using a Brookfield viscosimeter (type DV1-LVT). In order to measure the viscosity of the resin composition, the viscosimeter is fitted with a suitable spindle (to have a torque value around 50%). The resin composition is thermoregulated at T = 20°C using preheated water bath. After viscosity stabilisation, the value is recorded.

Tensile tests were performed on 3 tensile specimens 1A according to the ISO Standard 527-1 & -2 on a Shimadzu tensile tester (AGS-X50kN) at 50 mm.min⁻¹ equipped with force cell (F = 50 kN).

The glass transition temperature of the polyolefin phase was measured with a dynamic mechanical analyzer (DMA) DMA Q800 (TA Instruments) used in bending from 30 to 240 °C at 3 °C/min and at f = 5 Hz in bending mode (single cantilever) on 17.5 x 5 x 4 mm specimen. Hardness (Shore A): 6 measurements were performed on 4 mm-thick samples using Shore A durometer PCE-DD-A (PCE Instruments)

### Example 1: Preparation of composite materials

Table 1 summarizes the samples prepared according to this invention.

Table 2 lists comparative samples which either did not include a cycloolefin in the reaction mixture (Samples A to G) or which did not include a silicone resin (Sample H).

### Example 2: Thermomechanical properties

The results of the experiments conducted on samples according to this invention, prepared as described in Table 1, and on comparative samples as described above, are provided in Table 3.

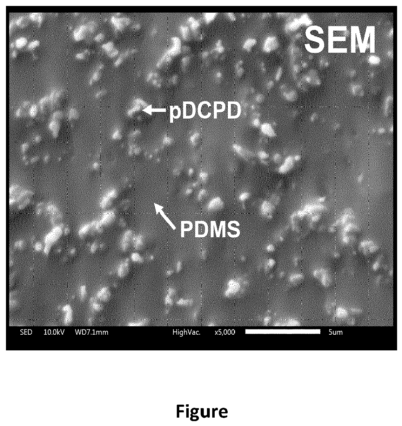

The glass transition measured corresponds to that of the polyolefin, whereas the T_{g} of the silicone elastomer is below 0 °C. In some cases, the T_{g} cannot be determined by DMA due to the very soft texture of the material and the probably small change induced by polyolefin inclusions in the thermogram. It was, however, confirmed that inclusions of polyolefin have been formed, both because the material had whitened and because the temperature of the reaction mixture increased with time (due to the exothermicity of the ROMP of cycloolefins while no exotherm is usually measured with silicone only). A SEM picture was also taken from Example 15, which is shown on the attached Figure.

It can be seen from Table 3 that adding a cycloolefin to the silicone resin decreases the viscosity of the resin, which makes the preparation of the composite material easier. In addition, the cycloolefin leads to polyolefin inclusions within the silicone matrix, which provide this material with higher hardness, elongation at break and slightly higher Young's modulus.

**Table 1**

| Ex. | Silicone resin | Resin/olefin ratio | Cross. agent | Cross. cat. / metal alkoxide | Cycloolefin | Met. catalyst | Activ. | Retard. | Additives | | Process |
|---|---|---|---|---|---|---|---|---|---|---|---|
| 1 | GP426 | 1.5 | TMOS | Sn | DCPD/TCPD | 899 | X | -- | -- | | P1 |
| 2 | GP426 | 1.5 | TMOS | Sn | DCPD/TCPD | 899 | X | -- | NBE-TEOS | | P1 |
| 3 | GP426 | 1.5 | TMOS | Sn | DCPD/TCPD | 899 | X | -- | Octene | | P1 |
| 4 | GP426 | 1.5 | TMOS | Sn | DCPD/TCPD | 899 | X | -- | AGE | | P1 |
| 5 | GP426 | 1 | TMOS | Sn | DCPD/TCPD | 899 | X | -- | | | P1 |
| 6 | GP426 | 1.8 | ETAS | -- | DCPD/TCPD | 899 | X | -- | Fe2O3, antiox | | P1 |
| 7 | GP426 | 1.2 | ETAS | -- | DCPD/TCPD | 899 | X | -- | SIS6962-0, Fe2O3, antiox | | P1 |
| 8 | GP426 | 1.2 | ETAS | -- | DCPD/TCPD | 899 | X | -- | S32, Fe2O3, antiox | | P1 |
| 9 | DMS-S27 | 2.1 | ETAS | Ti | DCPD/TCPD | 899 | X | -- | SIS6962-0 | | P1 |
| 10 | DMS-S27 | 2.1 | ETAS | A1 | DCPD/TCPD | 899 | X | -- | SIS6962-0 | | P1 |
| 11 | DMS-S27 | 2.1 | VTPS | Sn | DCPD/TCPD | 899 | X | -- | SIS6962-0 | | P2 |
| 12 | DMS-S27 | 2.1 | pMDI | Sn | DCPD/TCPD | 899 | X | -- | SIS6962-0 | | P3 |
| 13 | DMS-C23 | 2.1 | MCT-EP13 | -- | DCPD/TCPD | 911/899 | -- | -- | SIS6962-0, base | | P2 |
| 14 | FMS-S9922 | 2.1 | ETAS | -- | DCPD/TCPD | 899 | X | -- | SIS6962-0 | | P1 |
| 15 | DMS-S33 | 1.0 | ETAS | -- | DCPD/TCPD | 899 | X | -- | | | P4 |
| 16 | DMS-S33 | 0.9 | TEOS | Sn | DCPD/TCPD | 899 | X | -- | SIS6962-0, antiox | | P1 |
| 17 | DMS-S33 | 0.9 | TEOS | Sn | DCPD/TCPD | 899 | X | -- | SIS6962-0, Fe2O3, antiox | | P1 |

| **Table 1 (continued)** | | | | | | | | | | | |
|---|---|---|---|---|---|---|---|---|---|---|---|
| Ex. | Silicone resin | Resin/olefin ratio | Cross. Agent | Cross. catalyst | Cycloolefin | Met. catalyst | | Activ. | Retard. | Additives | Process |
| 18 | DMS-S33 | 0.9 | TEOS | Sn | ENB | 899 | | X | -- | SIS6962-0, antiox | P1 |
| 19 | DMS-S33 | 0.9 | TEOS | Sn | DCPD/TCPD/ COE 72/8/20 | 899 | | X | -- | SIS6962-0, antiox | P1 |
| 20 | DMS-S33 | 1.4 | MTAS | -- | DCPD/TCPD | 899 | | X | -- | SIS6962-0, antiox | P1 |
| 21 | DMS-S33 | 1.4 | MTAS | -- | DCPD/TCPD | 911/899 | | -- | -- | SIS6962-0, antiox | P1 |
| 22 | DMS-S33 | 1.4 | MTAS | -- | DCPD/TCPD | 899 | | X | X | SIS6962-0, antiox | P1 |
| 23 | DMS-S33 | 1.4 | MTAS | -- | DCPD/TCPD | M101 | | -- | -- | SIS6962-0, antiox | P1 |
| 24 | DMS-S33 | 1.4 | MTAS | -- | DCPD/TCPD | M204 | | -- | -- | SIS6962-0, antiox | P1 |
| 25 | DMS-S33 | 1.4 | MTAS | -- | DCPD/TCPD | ULM | | X | -- | SIS6962-0, antiox | P1 |
| 26 | DMS-S33 | 1.4 | ETAS | -- | DCPD/TCPD | SCHROCK | | -- | -- | SIS6962-0 | P2 |
| 27 | DMS-S33 | 1.4 | MTAS | -- | DCPD/TCPD | 911/899 | | -- | -- | SIS6962-0, antiox | P1 |
| 28 | DMS-S33 | 17.1 | MTAS | -- | COE | 911/899 | | -- | -- | SIS6962-0, antiox | P1 |
| 29 | DMS-S33 | 17.1 | SIM7590.0 | -- | DCPD/TCPD | 911/899 | | -- | -- | SIS6962-0, antiox | P1 |
| 30 | DMS-S33 | 17.1 | SIB1610.0 | -- | DCPD/TCPD | 911/899 | | -- | -- | SIS6962-0, antiox | P1 |
| 31 | DMS-S33 | 0.9 | HMS301 | Sn | DCPD/TCPD | 899 | | X | -- | SIS6962-0 | P1 |

**Table 2**

| Ex. | Silicone resin | Resin/olefin ratio | Cross. agent | Cross. catalyst | Cycloolefin | Met. catalyst | Activ. | Retard. | Additives | Process |
|---|---|---|---|---|---|---|---|---|---|---|
| A | GP426 | -- | TMOS | Sn | -- | -- | -- | -- | | P1 |
| B | GP426 | -- | ETAS | -- | -- | -- | -- | -- | Fe₂O₃ | P1 |
| C | GP426 | -- | ETAS | -- | -- | -- | -- | -- | SIS6962-0, Fe₂O₃ | P1 |
| D | DMS-S27 | -- | ETAS | Ti | -- | -- | -- | -- | SIS6962-0 | P1 |
| E | DMS-S33 | -- | ETAS | Sn | -- | -- | -- | -- | -- | P4 |
| F | DMS-S33 | -- | TEOS | Sn | -- | -- | -- | -- | SIS6962-0 | P1 |
| G | DMS-S33 | -- | MTAS | -- | -- | -- | -- | -- | SIS6962-0 | P1 |
| H | | -- | -- | -- | DCPD/TCPD | 899 | X | -- | -- | P1 |

**Table 3**

| | Ex. | Viscosity (cP) | Shore A | Strain at break (%) | Glass transition Tg (°C) | Young's Modulus E (MPa) |
|---|---|---|---|---|---|---|
| GP426/TMOS | 1 | n/d^{∗} | 24 | 23 | n/d | 2 |
| | A | 100 | 7 | 9 | / | 1 |
| | H | 6 | 99 | 7 | 176 | 2,000 |
| GP426/ETAS | 6 | 30 | 40 | 29 | n/d | 3 |
| | B | 100 | 8 | 13 | / | 1 |
| GP426/ETAS + silica | 7 | 6,000 | 60 | 59 | 160 | 6 |
| | C | 400,000 | 42 | 19 | / | 3 |
| DMS-S27/ETAS | 9 | n/d^{∗} | 19 | 292 | n/d | 1 |
| | D | 1,300 | 13 | 54 | / | 1 |
| DMS-S33/ETAS | 15 | 150 | 57 | 88 | 135 | 8 |
| | E | 4,000 | 8 | 56 | / | 0.1 |
| DMS-S33/TEOS | 19 | n/d^{∗} | 28 | 203 | 144 | 1 |
| | F | 5,300 | 15 | 130 | / | 1 |
| DMS-S33/MTAS | 20 | 900 | 42 | 177 | 179 | 5 |
| | G | 5,300 | 16 | 91 | / | 1 |

| | | | | | | |
|---|---|---|---|---|---|---|
| ^{∗}The silicone resin and the cycloolefin were not present in the same component. | | | | | | |

## Claims

1. Composite material comprising inclusions of a polyolefin obtainable by ring-opening metathesis polymerization of at least one cycloolefin, within a silicone matrix.

2. Composite material according to claim 1, **characterized in that** the cycloolefin is selected from dicyclopentadiene (DCPD), tricyclopentadiene (TCPD), tetracyclopentadiene (TeCPD), norbornene, norbornadiene, cyclopentene, cyclohexene, cycloheptene, cyclooctene (COE), cyclododecene, cyclooctadiene (COD), vinyl norbornene (VNB), ethylidene norbornene (ENB), decylnorbomene, octylnorbornene, hexylnorbomene, tolylnorbornene and mixtures thereof.

3. Composite material according to claim 2, **characterized in that** the cycloolefin is selected from dicyclopentadiene or mixtures thereof with at least one other cycloolefin selected from: tricyclopentadiene (TCPD), norbornene, vinyl norbornene (VNB), ethylidene norbornene (ENB), norbornadiene, cyclopentene, cyclohexene, cycloheptene, cyclooctene, cyclododecene, cyclooctadiene, decylnorbomene, octylnorbornene, hexylnorbomene, tolylnorbornene and mixtures thereof, preferably TCPD, vinyl norbornene (VNB), ethylidene norbornene (ENB), cyclooctadiene (COD) and/or cyclooctene (COE).

4. Composite material according to any one of claims 1 to 3, **characterized in that** the silicone matrix is produced by hydrolytic or non-hydrolytic condensation or dehydrocoupling reaction of a silicone resin with a cross-linking agent.

5. A method for the preparation of the composite material according to any one of claims 1 to 4, comprising the step of polymerizing by ring-opening metathesis at least one cycloolefin with at least one metathesis catalyst which is able to convert said cycloolefin into a polyolefin, in the presence of at least one silicone resin cross-linkable by condensation or by a dehydrocoupling reaction and of a cross-linking agent which is able to react with said silicone resin to produce a silicone network.

6. The method according to claim 5, **characterized in that** the metathesis catalyst comprises group VIII, group VII, group VI or group V metal complexes and preferably iron, rhenium, vanadium, ruthenium, tungsten, tantalum, osmium and molybdenum complexes and more preferably one or more ruthenium alkylidene complexes.

7. The method according to claim 6, **characterized in that** the ruthenium alkylidene complex comprises at least one *N*-Heterocyclic Carbene (NHC) or else at least one N-heteroacyclic carbene, as a ligand, and preferably one or two imidazolin-2-ylidene ligands, more preferably one or two 1-aryl-3-cycloalkyl-imidazolin-2-ylidene ligands, coordinated to the ruthenium atom, in addition to a monodentate, bidentate or tridentate alkylidene ligand.

8. The method according to any one of claims 5 to 7, **characterized in that** the reaction mixture further comprises at least one metathesis activator, preferably a Lewis or Bronsted acid or a metal complex having at least one organic ligand.

9. The method according to any one of claims 5 to 8, **characterized in that** the reaction mixture further comprises at least one metathesis retardant selected from the group consisting of: Lewis bases, electron donors or nucleophiles, preferably phosphites of formula P(OR)₃ and phosphines of formula PR₃ where the R groups independently represent H, alkyl, cycloalkyl, heteroaryl, aryl optionally substituted by one or more groups selected from halogen atoms and alkyl groups, or wherein two R groups form together a ring optionally substituted by a - (R'O)₂POR‴ group where the R' and R" groups independently represent H, alkyl, cycloalkyl, heteroaryl, aryl optionally substituted by one or more groups selected from halogen atoms and alkyl groups.

10. The method according to any one of claims 5 to 9, **characterized in that** the silicone resin is an organosilicon compound preferentially comprising an organopolysiloxane backbone, preferably an organopolysiloxane having at least two polar groups, such as epoxide, halogeno, carbinol, isocyanate, cyanoacrylate, acrylate, anhydride, amino, thiol, hydroxyl, fluoroalkyl or mercaptoalkyl groups per molecule, preferably two hydroxyl groups, more preferably forming two terminal silanol groups.

11. The method according to any one of claims 5 to 10, **characterized in that** the cross-linking agent is selected from the group consisting of: silanes bearing at least two and preferably three or four groups independently selected from acetoxy, enoxy, chloro, oxime, alkoxy, amine, benzamido and alkoxyamino groups, preferably silanes bearing alkoxy or acetoxy groups, wherein the silane may also include at least one non-reactive substituent such as an alkyl group, typically a methyl or ethyl group; titanium, aluminium or zirconium metalates; and mixtures thereof.

12. Use of the composite material as defined in any one of claims 1 to 4 in the manufacture of parts for terrestrial, nautical or aerospace vehicles (including cars, tractors, trucks, trains, buses, airplanes and space shuttles), such as bumpers, anti-vibration or dampening parts, protection for blades of wind turbines, sports articles (such as shoes), offshore installations (notably buoys and pipelines), coatings (including thermal insulation coatings, anti-corrosion paints, insulation covers or field joint coatings); chemical equipment including containers, gaskets and pipes, sealants, adhesives, molds, water treatment equipment, camping equipment, military items such as bulletproof vests, electromagnetic shields, or for repairing cracks in masonry structures, notably in concrete, stone or brick, preferably in the manufacture of offshore installations, sealants and coatings, more preferably in the manufacture of insulation coating for oil and gas production equipment.
